# EUROPÄISCHE PATENTSCHRIFT

(11) **EP 3 290 000 B1**
(45) Veröffentlichungstag und Bekanntmachung des Hinweises auf die Patenterteilung: **20.10.2021**
(21) Anmeldenummer: 17161558.6
(22) Anmeldetag: 17.03.2017
(51) Int. Cl.: A61C 13/00

(54) **DENTALFRAESMASCHINE**
DENTAL MILLING MACHINE
FRAISEUSE DENTAIRE

(30) Priorität: 06.09.2016 EP 16187371
(43) Veröffentlichungstag der Anmeldung: 07.03.2018
(73) Patentinhaber: Ivoclar Vivadent AG, 9494 Schaan (LI)
(72) Erfinder: Bogdan, Vadim, 75175 Pforzheim (DE); Lidan, Senad, 7320 Sargans (CH)
(74) Vertreter: Baronetzky, Klaus

(56) Entgegenhaltungen:
- EP-A1- 3 012 065
- CN-A- 104 096 696
- DE-A1-102011 109 939
- US-A1- 2011 083 307

## Beschreibung

Die Erfindung betrifft eine Dentalfräsmaschine, gemäß dem Oberbegriff von Anspruch 1.

Es ist seit langem bekannt, Dentalfräsmaschinen, unter die hier auch andere dentale Bearbeitungsmaschinen für die spanabhebende Bearbeitung von Werkstücken subsumiert werden sollen, mit Mitteln zu versehen, die anfallenden Späne aus dem Bearbeitungsbereich entfernen. Als vergleichsweise effizient hatte es sich herausgestellt, hierzu einen Saugluftstrom zu erzeugen, der den Bearbeitungsbereich durchtritt und Luft zusammen mit den erfassten Spänen aus dem Fräsraum absaugt. Typischerweise wird dem Fräsraum hierzu Frischluft - oder aber Umluft - oberhalb des Bearbeitungsbereichs zugeführt, und ein Sauganschluss ist unterhalb des Bearbeitungsbereichs vorgesehen. Als Beispiel sei hierfür auf die DE 10 2011 109939 A1 verwiesen.

Da bei dieser Lösung die Reinigungswirkung häufig nicht befriedigend ist, hat es zahlreiche Versuche gegeben, die Spanabfuhr zu verbessern. So ist es aus der DE 40 27 107 A1 bekannt geworden, den Fräsraum und damit - strömungstechnisch betrachtet - den Saugraum zu verkleinern. Dies führt jedoch dazu, dass der Bewegungsweg, der für Werkstück und Werkzeug zur Verfügung steht, eingeschränkt ist. Zwar lässt sich dieses Problem durch Wahl einer geschickten Achsenverteilung zumindest reduzieren. Es ist jedoch eher aufwändig, besonders gestaltete Bewegungsarme für beengte räumliche Verhältnisse bereitzustellen, und gegebenenfalls leidet dann auch die Fräsgenauigkeit.

Es ist auch vorgeschlagen worden, den Bearbeitungsbereich mit Blasdüsen zu versehen, um die dort anfallenden Späne aufzuwirbeln und zu verhindern, dass sie sich dort ablagern. Typischerweise ändert sich jedoch der Ort der tatsächlichen Bearbeitung während des Fräsvorgangs permanent, so dass eine Vielzahl von Blasdüsen bereitgestellt werden muss. Die je nicht an den aktuellen Bearbeitungsort weisenden Blasdüsen blasen dann gleichsam leer, sodass eine derartige Lösung jeher ineffizient ist.

Auch hinsichtlich der Blasdüsen sind zahlreiche Verbesserungen vorgeschlagen worden. So ist es aus der EP 3 012 065 A1 bekannt geworden, die Düsen mit Elektroden zu versehen, die ein elektrisches Feld zur Deionisierung der Späne bereitstellen. Diese Lösung ist bei der Verwendung von dentalen Kunststoffmaterialien ausgesprochen Vorteilhaft, da diese dann nicht mehr dazu neigen, sich aufgrund elektrostatischer Kräfte haftend an Oberflächen des Fräsraums abzusetzen.

Bei anderen dentalen Werkstoffen wie Keramiken ist die Neigung von Frässtaub, sich elektrostatisch aufzuladen, ohnehin geringer.

Ferner sind verschiedene Versuche bekannt geworden, die Abfuhr von Frässtaub bzw. von Frässpänen strömungstechnisch zu optimieren. Als Beispiel sei hierfür auf die DE 20 2015 100 312 U1 verwiesen. Bei dieser Lösung ist es vorgesehen, einen gleichmäßigen Luftstrom zu erzeugen, der auch die freiliegenden Schäfte von Werkzeugen eines Werkzeugmagazins erfassen soll.

Ferner ist es auch bereits vorgeschlagen worden, an zwei oberen und voneinander beabstandeten Raumecken des Fräsraums Zuluftdüsen anzuordnen und unterhalb des Bearbeitungsbereichs eine zentrale Absaugöffnung vorzusehen. Eine zentrale Absaugöffnung findet sich beispielsweise in der US 2011/083307 A1.

Nachteilig hierbei ist jedoch, dass bei der Entnahme des fertig gestellten Werkstücks dieses bei etwas nachlässiger Handhabung unmittelbar in den Sauganschluss fallen kann, sodass die zahntechnische Arbeit dann verloren ist. Zudem hat der Zahntechniker wegen dieses "Kloschüsseleffekts" bei der Bedienung ein unsicheres Gefühl, aufgrund der befürchtung, dass das Restaurationsergebnis verloren geht, was die Akzeptanz einer derartigen Lösung deutlich einschränkt.

Demgegenüber liegt der Erfindung die Aufgabe zugrunde, eine Dentalfräsmaschine gemäß dem Oberbegriff von Anspruch 1 zu schaffen, die eine bessere Akzeptenz aufweist, aber dennoch ein sauberes und störungsfreies Arbeiten ermöglicht.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, dass eine Dentalfräsmaschine einen in sich geschlossenen und besonders gestalteten Fräsraum aufweist. Typischerweise sind die Fräsräume von Fräsmaschinen aus miteinander verschraubten oder in anderer Weise befestigten Blechen realisiert, wobei teilweise auch andere Materialien zum Einsatz gelangen. Demgegenüber ist erfindungsgemäß eine einstückige Gestaltung aus einem geeigneten Material wie Kunststoff bevorzugt und wird erfindungsgemäß eingesetzt. Der Fräsraum weist dann bevorzugt keine Innenecken aus, zumindest im unteren Bereich nicht, so dass sich dort keine Späne und kein Frässtaub ablagern kann.

Die Übergänge zwischen der Bodenwand und den Seitenwänden sind je abgerundet mit Radien, die mindestens mehrere Millimeter betragen, bevorzugt aber an den relevanten Stellen mehrere Zentimeter, beispielsweise 10cm.

Die Bodenwand des Fräsraums ist dann nach der Art einer Hohlkehle ausgebildet, die sich mit einem Radius von beispielsweise ebenfalls ca. 10cm unterhalb des Bearbeitungsbereichs und quer durch den Fräsraum erstreckt. Die Neigung der Bodenwand ist zudem schräg, und zwar so, dass die unterste Stelle der Bodenwand an den Sauganschluss mündet. Demgegenüber ist die Bodenwand unterhalb des Bearbeitungsbereichs deutlich höher, so dass dort anfallender Frässtaub oder Frässpäne bereits aufgrund der Schwerkraft leicht dem Sauganschluss zugeführt werden.

Insbesondere aber unterstützt die Schrägstellung der Bodenwand die Strömung vom Zuluftanschluss zum Sauganschluss über den Boden hinweg, zumal keine Hindernisse wie Hinterschneidungen im Verlauf der Bodenwand ausgebildet sind.

Erfindungsgemäß ist der Zuluftanschluss dem Sauganschluss diametral gegenüberliegend, und zwar an einer oberen Ecke des Fräsraums. Mindestens eine Düse, bevorzugt mehrere Düsen, sind auf den Bearbeitungsbereich gerichtet, so dass dieser abgeblasen wird.

In weiterer vorteilhafter Ausgestaltung ist eine Bodenspüldüse realisiert. Diese bläst Luft senkrecht nach unten, so dass die Luftströmung dieser Düse an der benachbarten Seitenwand entlanggleitet und dann über den ausgesprochen großen Umlenkradius in die Hohlkehle eingeleitet wird und dort als laminare Strömung etwaige Ablagerungen zum Sauganschluss bläst.

Besonders günstig ist es, wenn die Neigung der Bodenwand ausgehend von dem Umlenkradius unterhalb der Luftzufuhr im Wesentlichen konstant ist und zumindest nicht abnimmt. Dadurch wird die Neigung, dort Ablagerungen zu bilden, im Vergleich zum Stand der Technik deutlich reduziert.

In modifizierter Ausgestaltung ist es vorgesehen, dass die Neigung der Bodenwand zum Sauganschluss hin noch sogar etwas zunimmt, beispielsweise von 18 auf 23 Grad. Hiermit lässt sich berücksichtigen, dass die Strömungsgeschwindigkeit aufgrund der Luftzufuhr-Düse über den Verlauf der Bodenwand abnimmt, da der Strömungsquerschnitt insgesamt zunimmt, so dass die Neigung der Späne anzuhaften, in Richtung Sauganschluss aufgrund der geringeren Strömungsgeschwindigkeit größer wird, welche Erscheinung jedoch durch den größeren Neigungswinkel der Bodenwand kompensiert wird.

Während die Realisierung des erfindungsgemäßen Fräsraums als einstückiges Formteil bevorzugt ist, bedeutet dies nicht, dass keine Türöffnung für den Fräsraum vorgesehen sein könnte. Die Tür ist bevorzugt von der Bodenwand deutlich beabstandet, so dass die wichtige Spanabfuhr durch die Tür nicht behindert wird.

Dies gilt sinngemäß in gleicher Weise für Durchbrechungen, die für die sonstige Bedienung des Fräsraums erforderlich sind, beispielsweise die Antriebsspindel, Bedienarme wie ein Roboterarm für das Werkstück oder aber Durchbrechungen für den Werkstückswechsel oder für den Werkzeugwechsel.

Bevorzugt ist der Bearbeitungsbereich - bezogen auf die Mitte des Fräsraums - der Luftzufuhr näher benachbart als dem Sauganschluss. Hierdurch lässt sich bei einem vergleichsweise kleinen Strömungsquerschnitt eine vergleichsweise starke Luftströmung bereitstellen, die eine gute Ablasewirkung des Bearbeitungsbereichs ermöglicht.

Erfindungsgemäß besonders günstig ist es, dass die Bodenwand dem Grunde nach der Art einer Hohlkehle ausgebildet ist. Im Seitenschnitt betrachtet weist der Fräsraum im unteren Bereich insofern im Wesentlichen die Form eines "U" auf. Hierdurch werden Staubpartikel oder Späne der zentralen Mitte der Hohlkehle zugeführt, wo sie sich anhäufen können und insofern einen Strömungswiderstand bilden, der ihre Abfuhr begünstigt.

Es versteht sich, dass die exakte Form des Hohlkehlenquerschnitts in weiten Bereichen an die Erfordernisse anpassbar ist. So kann zum Beispiel der Querschnitt etwas spitzer gewählt werden, also etwas "V"-förmiger, wobei jedoch darauf zu achten ist, dass nicht durch einen zu kleinen Radius die Strömungsgeschwindigkeit abnimmt.

Erfindungsgemäß günstig ist es auch, dass unterhalb des Bearbeitungsbereichs eine gleichmäßige und geschlossene Fläche in Form der Bodenwand vorliegt. Auch wenn sich der Bearbeitungsbereich bewegt, was bei einer Vier-Achs-Fräsmaschine oder einer Fünf-Achs-Fräsmaschine regelmäßig der Fall ist, erfolgt das Abblasen des Bearbeitungsbereichs stets im Bereich vor den Düsen der Luftzufuhr und stets oberhalb abschalten und in vorteilhafter Ausgestaltung der Erfindung ist es vorgesehen, dass mit einer Umschaltklappe zwischen einem Nassauslass und einer für den Trockenbetrieb bestimmten Saugleitung umgeschaltet wird. Die Umschaltklappe kann bevorzugt mit einem Gelenk an der Oberseite des Anschlusses versehen sein. In geschlossenen Zustand wird dann die Luft davor nach oben abgeleitet, und gegebenenfalls im unteren Bereich an der Klappe verbleibende Ablagerungen könnten weggespült werden, wenn auf Nassbetrieb umgeschaltet wird und damit der Ablauf geöffnet wird.

In vorteilhafter Ausgestaltung ist es vorgesehen, dass die Umschaltklappe, die auch als Schieber ausgebildet sein kann, alternativ entweder die Luftdüsen abdeckt und die Deionisierefektroden freigibt, wie es für das Fräsen von PMMA oder sonstigen Kuststoffen günstig ist, oder die Deionisierelektroden abdeckt und die Lufteinlässe freigibt, wie es für das Fräsen von Keramik oder für das Nassfräsen erwünscht ist.

Es ist auch möglich, anstelle eines Umschaltelements zwei separate Absperrelemente zu verwenden, die je nach Anwendungsfall zum Einsatz gelangen können. Das Absperren der Deionisierdüsen beispielsweise beim Nassfräsen hat den Vorteil, dass diese dann nicht durch Fräsmehl verschmutzt werden.

Die Klappe dichtet insofern gegen eine untere Ebene Gleitfläche, die hinterschneidungsfrei ausgebildet ist und bei geöffneter Klappe einen glatten Übergang zwischen dem Bereich des Auslasses vor der Umschaltklappe und dem Bereich des Auslasses nach der Umschaltklappe bietet.

Das für die Herstellung des Fräsraums verwendete Kunststoffteil kann in beliebiger geeigneter Weise erzeugt werden, wobei eine glatte Innenfläche wesentlich ist. Beispielsweise kann es durch Schleuderguss erzeugt werden.

Erfindungsgemäß besonders günstig ist es, wenn sich der Auslass in der Verlängerung der hohlkehligen Bodenwand seitlich weg erstreckt. Gerade bei der Nassbearbeitung führt dies zu einer ungehinderten Wasserströmung, die mitgeführte Späne mitreisst, ohne dass es am Auslass des Fräsraums zu einer nennenswerten Strömungsumlenkung kommen würde.

In vorteilhafter Ausgestaltung der Erfindung ist es vorgesehen, durch eine besondere Anordnung der Blas-Luftdüsen und durch eine besondere Steuerung die Reinigungsleistung der erfindungsgemäßen Dentalfräsmaschine weiter zu verbessern.

Hierzu ist es vorgesehen, mittels einer Steuervorrichtung die Blas-Luftdüsen gezielt für wenige Sekunden mit hohem Luftdruck und damit hoher Luftgeschwinigkeit einzuschalten. Durch die stoßartige Luftbeaufschlagung lässt sich eine besonders gute Verwirbelung und damit die Möglichkeit der besonders guten Absaugung bereitstellen.

Die Luftdüsen sind bevorzugt als Luftverstärkerdüsen ausgebildet. Bei derartigen Düsen ist ein ringförmiger Kanal im Verlauf der Düse vorgesehen. Dieser wird mit Druckluft beaufschlagt. Über eine schmale Rinndüse tritt die Luft mit hoher Geschwindigkeit in den Innenraum der Düse ein.

Aufgrund einer Kombination aus Coanda-Effekt und dem Venturi-Effekt haftet die Luft auf an der gebogenen Innenwand der Düse nahe dem Ringspalt, wodurch die Luftströmung zum Düsenauslass geführt wird. Im zentralen Einlassbereich der Düse wird hierdurch ein Unterdruck erzeugt, wodurch ein hohes Luftvolumen für das Durchtreten der Düse bereitgestellt wird. Hierdurch ergibt sich bei derartigen Luftverstärkerdüsen ein hohes Luftvolumen, gepaart mit einer hohen Strömungsgeschwindigkeit.

Eine Düse, bei der ebenfalls die Kombination aus Coanda-Effekt und Venturi-Effekt ausgenutzt wird, jedoch an einer aussen liegenden Stelle, ist bereits aus der DE 25 37 953 A1 bekannt.

Durch die innen offenen Kanäle der Luftverstärkerdüsen lässt sich nun in erfindungsgemäß besonders günstiger Weise auch bei abgeschalteter Druckluft durch den Saugluftstrom Luft ansaugen. Hierzu ist es bevorzugt, dass während eines Frässchritts die Saugvorrichtung mit reduzierter Leistung betrieben wird, und zwar kontinuierlich.

Während des gezielten Impulsreinigungsvorgang nach dem Frässchritt wird erfindungsgemäß bevorzugt die Saugvorrichtung mit voller Saugleistung eingeschaltet.

In vorteilhafter Ausgestaltung ist es vorgesehen, dass die aufsummierten Strömungsquerschnitte der Luftverstärkerdüsen dem Strömungsquerschnitt des Auslasses entsprechen.

Die erfindungsgemäß vorgesehenen Drücke und Strömungsgeschwindigkeiten sowie Luftvolumina lassen sich in weiten Bereichen an die Erfordernisse anpassen. Wenn der Blas-Luftdruck einen vorgegebenen Wert überschreitet, ist es günstig, wenn ein Druckminderer eingesetzt wird, der den Luftdruck auf beispielsweise 5 Bar oder 2 Bar reduziert.

Besonders günstig ist es, dass die erfindungsgemäß vorgesehene impulsartige Blasleistung die erforderliche Kompressorleistung für den Blasluftstrom reduziert. Typischerweise weisen Kompressoren einen Druckluftspeicher von beispielsweise 50 Litern auf. Wenn der Kompressor, wie es bei preisgünstigen Kompressoren üblich ist, eine Dauerleistung von beispielsweise 30 l/min hat, lässt sich erfindungsgemäß der Druckluftspeicher ausnutzen. Während des Impulsblasens kann dann beispielsweise mit einem Volumenstrom von 240 l/min geblasen werden.

Erfindungsgemäß günstig ist es, wenn der Blasimpuls vom Luftvolumen her im Wesentlichen dem Innenraumvolumen des Fräsraums entspricht, so dass während des Blasimpulses der komplette Fräsraum mit Frischluft versorgt wird.

Es versteht sich, dass die Saugvorrichtung in der Lage sein muss, die anfallende Druckluftspitze ohne weiteres abzufangen. Dies ist typischerweise aber unproblematisch, da derartige Saugvorrichtungen typischerweise ein Saugluftvolumen von beispielsweise 500 l/min aufweisen, also deutlich mehr als für das erfindungsgemäße impulsblasen an Volumenstrom vorgesehen ist.

In erfindungsgemäß besonders günstiger Weise wird nach dem Blasimpuls sowohl der Saugluftstrom als auch der Blasluftstrom abgeschaltet. Durch die Frischluftzufuhr durch die Luftverstärkerdüsen hindurch ergibt sich ein Umgebungsluftdruck im Fräsraum, und es kann beispielsweise ein Werkzeugwechsel für die Vornahme des nächsten Frässchritts durch eine rückwärtige Tür im Fräsraum vorgenommen werden, ohne dass ein nennenswerter Luftaustausch mit der Umgebung erfolgt.

Erfindungsgemäß besonders günstig ist es, dass die Reinigung durch das erfindungsgemäße Impulsblasen voreingestellt entsprechend dem zu Grunde liegenden Fräsprogramm automatisch erfolgen kann. Wenn ein Frässchritt beispielsweise 10 min dauert, kann das Impulsblasen zwischen 5 Sekunden und 15 Sekunden mit zugleich erhöhtem Saugluftstrom nach Ende des Frässchritts voreingestellt vorgenommen werden. Das Erfordernis eines Benutzereingriffs kann erfindungsgemäß vermieden werden. Wenn beispielsweise eine Brücke aus einer Vielzahl von einzelnen Bestandteilen gefräst werden soll, lassen sich so ohne weiteres mehrere Frässchritte aneinander reihen, je mit geringer Unterbrechung durch das Impulsblasen, und gegebenenfalls durch einen erforderlichen Werkzeugwechsel.

Die erfindungsgemäße Dentatfräsmaschine ist nicht auf ein bestimmtes Material beschränkt. So kann beispielsweise das hier bevorzugt beschriebene Verfahren beim Fräsen von Zirkondioxid-Keraminken eingesetzt werden. Beim Fräsen von Komposits bzw. Kunststoff ist es vorgesehen, den Luftverstärkerdüsen vorgelagerte Deionisierefektroden einzusetzen, die bei Nichtgebrauch durch eine Abdeckung geschützt sind. Die Deionisierelektroden werden mit einer Wechselspannung zwischen 5000 Volt und 10.000 Volt betrieben und sind dazu bestimmt, die beim Kunststofffräsen anfallenden Kuststoffchips zu deionisieren, damit diese nicht an dem Werkzeug bzw. der Fräsraumwand haften und so besser abgeführt werden.

Beim Fräsen von Silikat- oder Feldspatkeramiken, beispielsweise Lithiumdisilikat, kann auch nassgefräst werden. Auch hierbei lassen sich die erfindungsgemäßen Luftverstärkerdüsen für das Reinigen einsetzen.

Wenn von Nass- auf Trockenfräsen gewechselt werden soll, ist eine besonders gute Trocknung und Reinigung erforderlich; dies kann erfindungsgemäß durch mehrfach ineinander eingeschaltetes Impulsblasen realisiert werden.

Es versteht sich, dass erfindungsgemäß auch der Fräs- oder Roboterarm, der das Werkstück hält, gereinigt wird. Seine größte Aufenthaltswarscheinlichkeit liegt bei der bevorzugten Ausführung der Dentalfräsmaschine im rechts angeordneten Bereich, so dass dort zwei Düsen vorgesehen sind. Der Fräsarm wird in beliebiger geeigneter Weise gedreht, um einerseits möglichst wenig Windschatten zu erzeugen, andererseits sicherzustellen, dass alle Flächen des Fräsarms ringsum gereinigt werden können.

Bevorzugt ist die erfindungsgemäße Dentalfräsmaschine als 5/0-Fräsmaschine ausgebildet, also mit 5 Bewegungsachsen des das Werkstück tragenden Roboterarms und keiner Bewegungsachse der Frässpindel.

Weitere Vorteile, Einzelheiten und Merkmale ergeben sich aus der nachfolgenden Beschreibung mehrerer Ausführungsbeispiele der Erfindung anhand der Zeichnung.

Es zeigen:
- Fig. 1: eine schematische Ansicht einer Ausführungsform einer erfindungsgemäßen Dentalfräsmaschine;
- Fig. 2: eine Seitenansicht des Fräsraums der Maschine gemäß Fig. 1;
- Fig. 3: ein Horizontalschnitt durch die Ausführungsform gemäß Fig. 1 und 2;
- Fig. 4: eine schematische Ansicht einer Ausführungsform eines erfindungsgemäßen Fräsraums einer Dentalfräsmaschine;
- Fig. 5: eine Detailansicht zu einer Ausführungsform einer erfindungsgemäßen Dentalfräsmaschine;
- Fig 6: eine schematische Darstellung einer weiteren Ausführungsform der Erfindung;
- Fig. 6a: ein Schnitt durch eine bevorzugt erfindungsgemäß einzusetzende Luftverstärkerdüse;
- Fig. 7: ein Schnitt durch die Ausführungsform gemäß Fig. 6, jedoch aus einer um 90 Grad gedrehten Position; und
- Fig 8: ein Zeitdiagramm zur Steuerung in einer erfindungsgemäßen Dentalfräsmaschine.

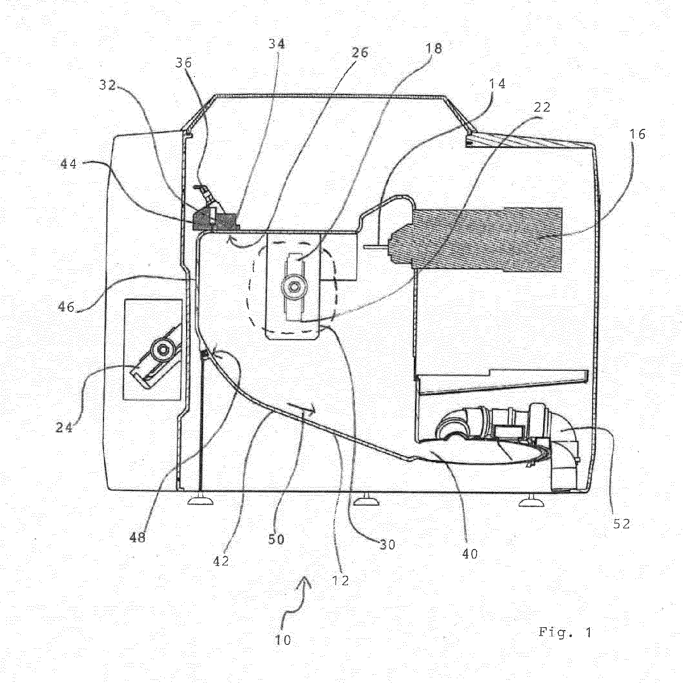

Die in Fig. 1 dargestellte Dentalfräsmaschine 10 weist einen Fräsraum 12 auf, der in besonderer Weise gestaltet ist. Der Fräsraum 12 ist ein geschlossenes Element und besteht aus einem Material mit einer glatten und nicht-haftenden Oberfläche wie beispielsweise Kunststoff. In an sich bekannter Weise nimmt er eine Spindel 14 auf, die als Werkzeug dient und von einem Spindelmotor 16 angetrieben ist. Ferner nimmt er das Werkstück 19 auf, das in einem Werkstückhalter 22 gelagert ist. Über eine Mehrzahl von Bewegungsachsen lässt sich die relative Position zwischen Werkstück 18 und Spindel 14 ändern, beispielsweise in fünf Achsen.

Für den Wechsel des Werkstücks ist eine rückwärtige Wand des Fräsraums 12 mit einer Tür versehen, und hinter dem Fräsraum ist ein Magazin mit weiteren Werkstücken angeordnet, von denen ein weiteres Werkstück 24 in Fig. 1 sichtbar ist.

Ferner ist die Vorderwand des Fräsraums 12 im oberen Bereich mit einer Zugangstür versehen.

Die in der Darstellung gemäß Fig. 1 linke obere Seite des Fräsraums 12 nimmt eine Zuluftöffnung 26 auf, die je mehrere Düsen aufweist. Die Düsen sind überwiegend auf einen Bearbeitungsbereich 30 gerichtet, in welchem die Spindel das Werkstück spanabhebend bearbeitet. Die Düsen 32 sind an einem Düsenträger 34 befestigt, der seinerseits außen an dem Fräsraum 12 angebracht ist.

Im Bereich des Düsenträgers 34 sind zu dem Elektroden 36 angeordnet, die mit elektrischer Spannung zum Deionisieren der zugeführten Luft beaufschlagt sind. Die Beaufschlagung erfolgt beim Trockenbetrieb, während die Elektroden beim Nassbetrieb der Dentalfräsmaschine 10 durch einen nicht-dargestellten Schieber verschlossen werden. Somit lassen sich entweder die Deionisierelektroden 36 oder die Düsen 32 von dem Schieber abdecken.

Von der linken oberen Ecke gemäß Fig. 1 ausgehend strömt die bereitgestellte Zuluft zum Bearbeitungsbereich 30 und über diesen hinaus zu einem Auslass 40. Der Auslass 40 liegt der Zuluftöffnung 26 diametral gegenüber. Schwebeteilchen, beispielsweise Frässtaub, werden so aus dem Fräsraum entfernt und mit der Luftströmung abgeführt.

In vielen Fällen entstehen jedoch auch Frässpäne, die aufgrund ihres Gewichts nach unten fallen, in den Bereich der Bodenwand 42 des Fräsraums. Erfindungsgemäß ist es nun vorgesehen, die Bodenwand 42 des Fräsraums zu neigen, und zwar so, dass sie zum Auslass 40 hinabfällt, insbesondere mit einer im Wesentlichen konstanten Steigung. Die Frässpäne neigen aufgrund ihres Eigengewichts dazu, in diese Richtung zu rutschen.

In besonders vorteilhafter Ausgestaltung ist zusätzlich noch eine gezielte Mitnahmeströmung für die Bodenwand bereitgestellt, die von einer Düse 44 erzeugt wird. Die Düse 44 lässt Luft senkrecht nach unten entlang der Seitenwand 46 strömen. Unten anschließend an die Seitenwand 46 ist eine Strömungsumlenkung 48 mit einem sehr großen Radius von beispielsweise etwa dem halben Durchmesser des Fräsraums angeordnet. Die Strömung aus der Düse 44 verläuft daher im Wesentlichen laminar über die Strömung an der Seitenwand 46 lang, weiter an der Strömungsumlenkung 48 entlang und dann über die Bodenwand 42 hinweg. Dort nimmt diese Mitnahmeströmung 50 dort befindliche Späne mit und führt sie dem Auslass 40 zu.

Der Auslass 40 ist hierzu bevorzugt über eine Saugleitung 52 an eine nicht dargestellte Unterdruckquelle angeschlossen. Am Auslass 40 entsteht daher Unterdruck, was die Strömungsgeschwindigkeit dort erhöht.

Durch die erzeugte Mitnahmeströmung 50 lässt sich zudem beobachten, dass ein herunterfallender Frässpan gar nicht bis zur Bodenwand 42 gelangt, sondern von der Mitnahmeströmung 50 gleich mitgeführt und dem Auslass 40 zugeführt wird.

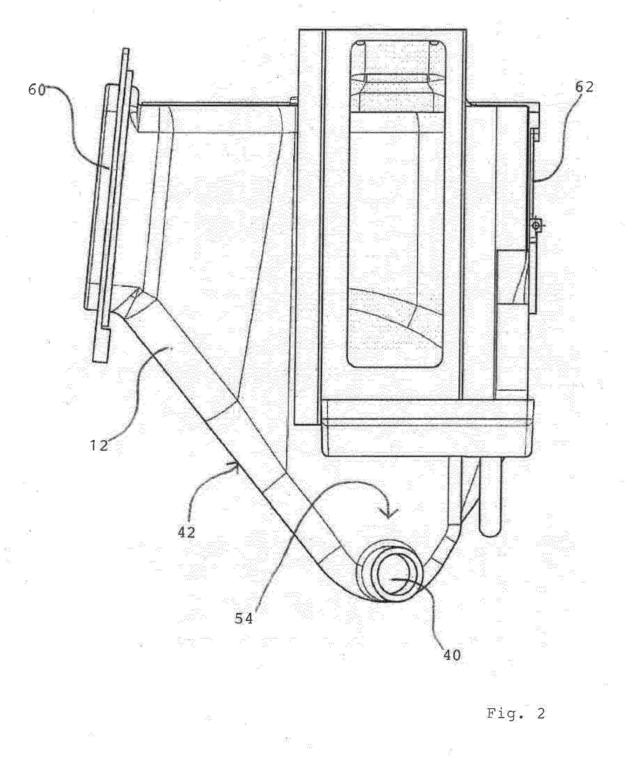

Aus Fig. 2 ist ersichtlich, in welcher Weise der Fräsraum 12 in seitlicher Vertikalansicht ausgebildet sein kann. Der Fräsraum 12 ist im Bereich der Bodenwand 42 nach der Art einer Hohlkehle ausgebildet und weist eine im wesentlichen "U"- oder "V"-förmige Gestalt auf. In ähnlicher Weise wie beispielsweise eine Regenrinne wird umherfliegender Frässtaub dem zentralen Bereich 54 der Bodenwand 42 zugeleitet und kann so mit der Mitnahmeströmung 50 dem Auslass 40 zugeleitet werden.

Aus Fig. 2 ist zudem ersichtlich, dass im oberen/vorderen Bereich des Fräsraums eine Tür 60 ausgebildet ist, über welche der Fräsraum öffenbar ist.

Eine Rückseitige Tür 62, die ebenfalls recht weit oben angeordnet ist, ist im Fräsbetrieb verschlossen und dient dem Werkstückwechsel.

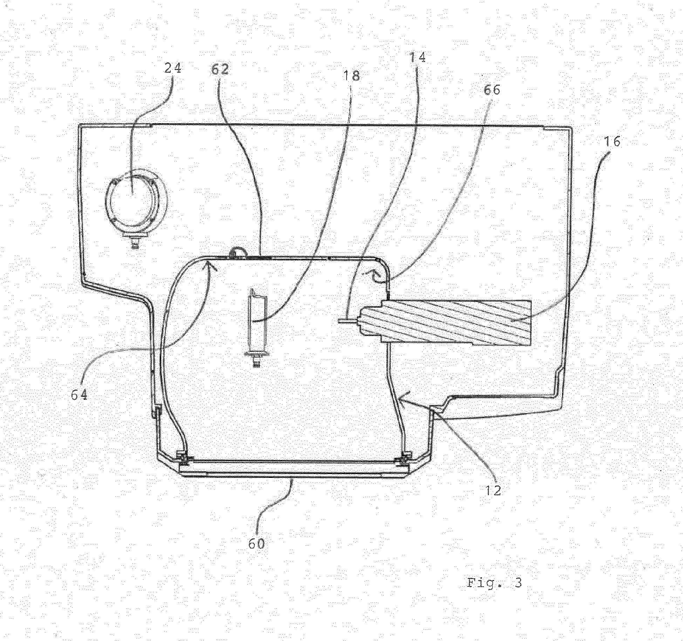

Aus Fig. 3 ist eine Dentalfräsmaschine 10 in erfindungsgemäßer Ausgestaltung im Horizontalschnitt ersichtlich. Gleiche Bezugszeichen weisen hier wie auch in weiteren Figuren auf gleiche oder entsprechende Teile hin. Wie ersichtlich ist, weist der Fräsraum 12 gerundete Ecken 64 und 66 auf, so dass nicht die Gefahr besteht, dass sich dort Frässpäne ablagern.

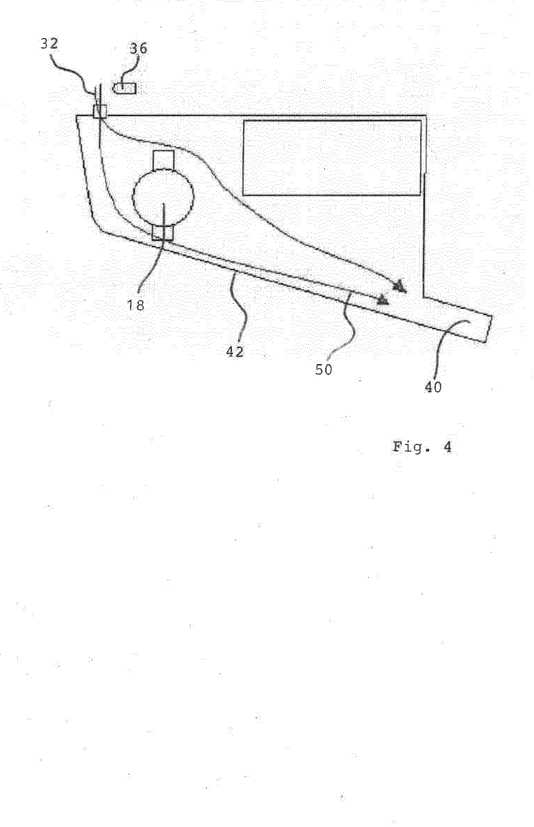

Eine weitere Ausführungsform einer erfindungsgemäßen Dentalfräsmaschine ist aus Fig. 4 schematisch ersichtlich. Der Bearbeitungsbereich und mit ihm das Werkstück 18 sind im linken Drittel des Fräsraums 12 angeordnet, also den Düsen 32 eng benachbart. An dieser Stelle weist die Luftströmung eine vergleichbar große Strömungsgeschwindigkeit auf, während diese zum Auslass 40 typischerweise aufgrund des größeren Strömungsquerschnitts sinkt. Die Bodenwand 42 weist auch bei der Ausführungsform gemäß Fig. 4 eine gleichbleibende Neigung auf.

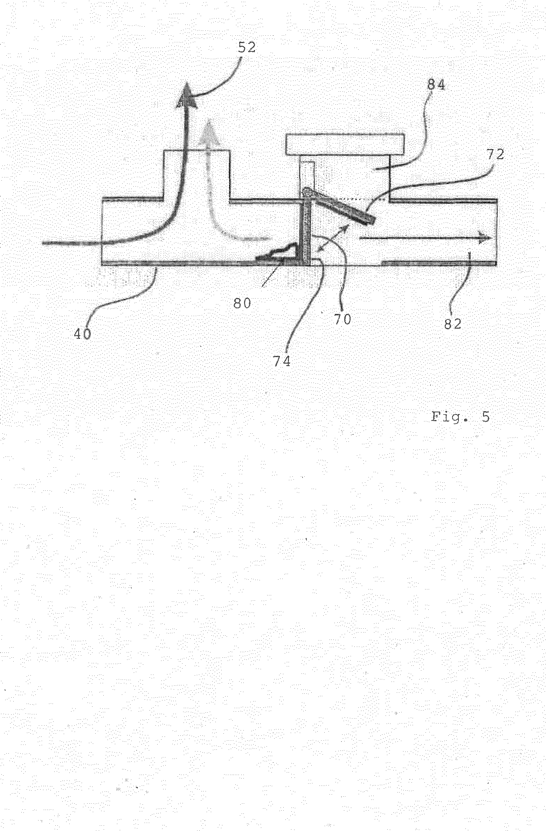

Aus Fig. 5 ist eine Umschaltvorrichtung für Nass- und Trockenbetrieb ersichtlich. Eine Umschaltklappe 70 lässt sich zwischen der oberen in Fig. 5 dargestellten Nassposition 72 und der unteren sich vertikal erstreckende Trockenposition 74 verschwenken. Die Achse der Umschaltklappe 70 befindet sich oben an der zugehörigen Leitung.

In der Trockenposition 74 ist die Umschaltklappe 70 geschlossen. Die Luftströmung durch den Auslass 40 erfolgt zu der Saugleitung 52 hin, die vor der Umschaltklappe 70 abzweigt. An der Umschaltklappe 70 können sich bei dieser Ausgestaltung Ablagerungen 80 bilden.

Wenn nun auf den Nassbetrieb umgeschaltet, wird die Umschaltklappe 70 in die Nassposition 72 verschwenkt. In dieser Position liegen die Ablagerungen 70 frei in dem den Auslass 40 durchtretenden Spülwässer, so dass die Wasserströmung die Ablagerungen 70 mit wegspült und dem Abwasseranschluss 82 zuleitet.

Oberhalb der Umschaltklappe 70 ist bei der hier dargestellten Ausführungsform zudem ein Wartungsschacht 84, der in an sich bekannte Weise eine gelegentliche Grundreinigung und Wartung ermöglicht.

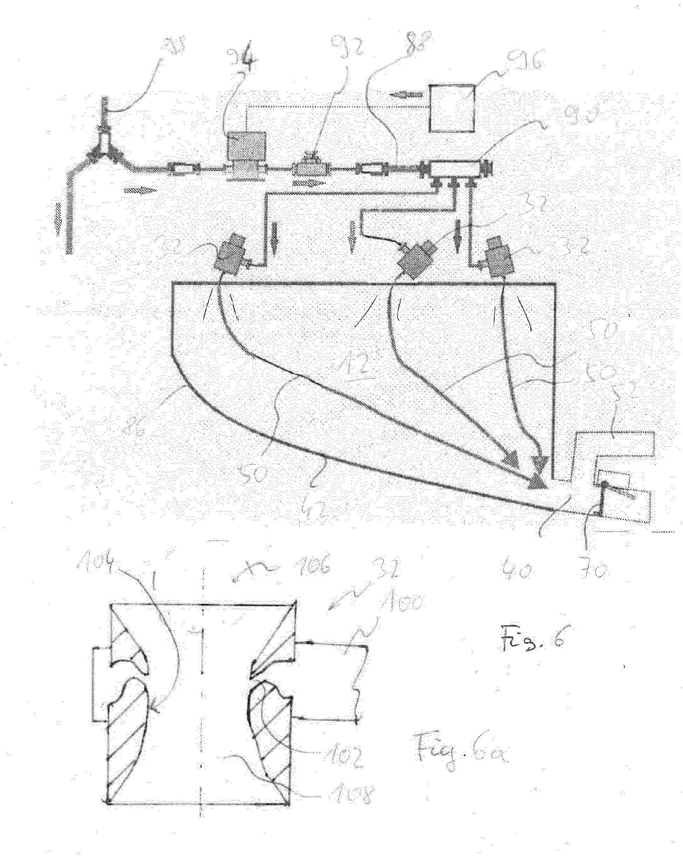

In Fig. 6 ist eine weitere Ausführungsform einer erfindungsgemäßen Dentalfräsmaschine dargestellt. Gleiche Bezugszeichen weisen hier auf gleiche oder entsprechende Teile wie in den anderen Figuren hin. Die erfindungsgemäßen Luftdüsen 32 sind als Luftverstärkerdüsen ausgebildet, wozu der Aufbau im Einzelnen aus Fig. 6a ersichtlich ist.

Es sind drei Luftdüsen 32 vorgesehen, die je schräg gestellt angeordnet sind. Die am weitesten links angeordnete Luftverstärkerdüse 32, die am weitesten entfernt von dem Auslass 40 angeordnet ist, weist eine Schrägstellung um ca. 20 Grad nach links auf, also zu der dieser benachbarten Seitenwand. Die Luftströmung erfolgt damit besonders gut der Ausrundung 86 der Bodenwand 42 folgend.

Auch die am weitesten rechts angeordnete Luftverstärkerdüse 32 ist der ihr benachbarten Seitenwand zugewandt, ebenfalls in einem Winkel von ebenfalls 20 Grad. Ablagerungen an den Seitenwänden lassen sich so vermeiden.

Die mittlere Luftverstärkerdüse 32 ist zum Aulass 40 hin verlagert und in die vom Auslass abgewandte Richtung geneigt, beaufschlagt also schwerpunktmäßig den zentralen Bereich des Fräsraums 12.

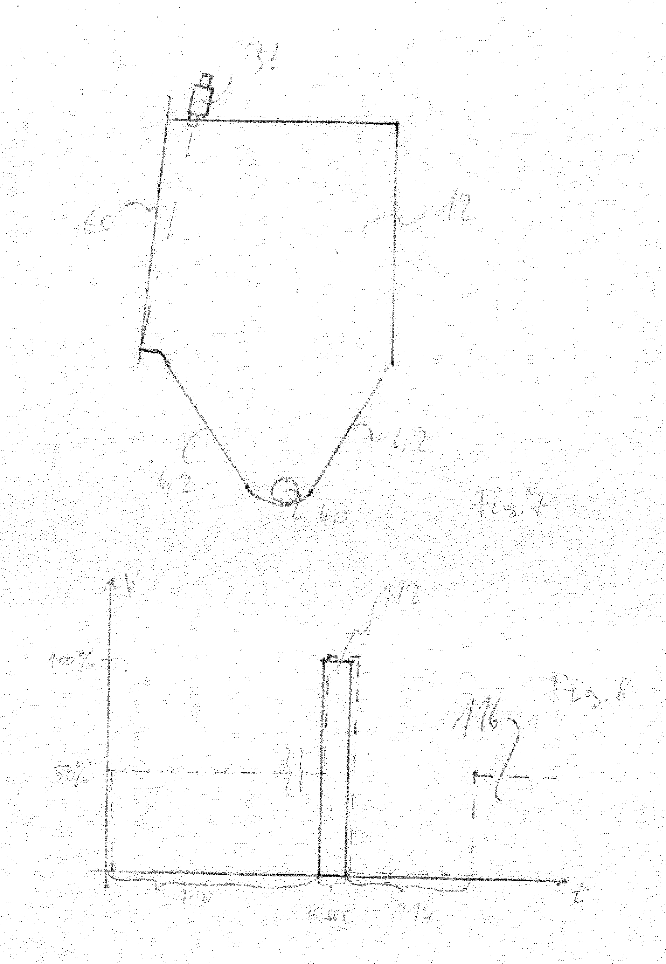

Ferner sind die Luftverstärkerdüsen 32, wie aus Fig. 7 ersichtlich ist, zur Tür 60 hin, also nach vorne im Fräsraum 12, verlagert.

Es versteht sich, dass die Anordnung der Luftverstärkerdüsen 32 in weiten Bereichen an die Erfordernisse anpassbar ist. Sie werden gemeinsam über eine Druckluftleitung 88 mit einem Verteiler 90 versorgt. Der Verteiler 90 erlaubt die Relativeinstellung der Strömungsvolumina zu den einzelnen Luftverstärkerdüsen 32.

In dem dargestellten Ausführungsbeispiel ist ferner ein Druckminderer 92 angeordnet, und ein Ventil 94 schaltet die Druckluft, basierend auf dem Signal einer Steuervorrichtung 96.

Das Ventil 96 ist eingangsseitig an ein Druckluftnetz 98 angeschlossen, das unter Druck steht, beispielsweise 7 Bar bis 10 Bar.

Eine mögliche Ausführung einer Luftverstärkerdüse 32 ist aus Fig. 6a ersichtlich. Über die Zuleitung 100 und einen Ringspalt 102 wird aufgrund der Verengung des Ringspalts Luft mit hoher Strömungsgeschwindigkeit eingespeist. Die Strömung lehnt sich an der gerundeten Flanke 104 der Düse an. Im zentralen Eingangsbereich 106 entsteht ein erheblicher Unterdruck, der dazu führt, dass Saugluft mit hoher Strömungsgeschwindigkeit eingesaugt und durch die Düse ausgeblasen wird, wobei zugleich ein hohes Luftvolumen erreicht wird.

Wenn keine Zuluft über den Zuluftkanal 100 zugeführt wird, vermag die erfindungsgemäße Luftverstärkerdüse 32 als Lufteingang über ihre zentrale Öffnung 108 wirken, so dass hierdurch ein Druckausgleich zwischen Fräsraum und Umgebungsluft erfolgen kann.

Gemäß Fig. 7 ist es vorgesehen, dass die Luftverstärkerdüsen 32 oder mindestens ein Teil dieser schräg zur Tür 60 geneigt sind, und zudem dieser benachbart angeordnet sind. Dadurch wird die Tür freigeblasen, so dass das Innere des Fräsraums gut sichtbar ist.

Aus Fig. 8 ist ein Zeitdiagramm für eine Ausführungsform einer erfindungsgemäßen Dentalfräsmaschine, gesteuert durch die Steuervorrichtung 96, ersichtlich.

Die Saugluft ist gestrichelt dargestellt, und die Zuluft mit durchgezogenen Linien. Während des Frässchritts 110 wird mit einer Saugleistung von 50 % der Maximalleistung abgesaugt. Der Frässchritt kann beispielsweise 10 min dauern. Unmittelbar hieran anschließend wird ein Blasimpuls 112 abgegeben, so dass mit hohem Druck und großem Luftvolumen Luft aus den Luftverstärkerdüsen 32 austritt. Zugleich oder kurz danach wird die Saugleistung auf 100 % erhöht. Dies dauert etwa 10 Sekunden. Hieran anschließend erfolgt bei Bedarf ein Werkzeugwechsel in einem Werkzeugwechsel-Schritt 114, der beispielsweise 30 Sekunden bis 1 Minute dauert. Zu diesem Zeitpunkt ist sowohl die Blasluft als auch die Saugluft abgeschaltet.

Hieran anschließend findet ein weiterer Frässchritt 116 statt, wiederum mit halb eingeschalteter Saugluft.

Es versteht sich, dass die genauen Zeitabläufe, Drücke und Luftvolumina in Abhängigkeit von dem zu fräsenden Dentalrestaurationsteil gesteuert werden können, so dass sie auch wesentlich verkürzt oder verlängert werden können.

## Patentansprüche

1. Dentalfräsmaschine, mit einem geschlossenen Fräsraum (12), der eine Zuluft-Öffnung (26) und einen Auslass (40) aufweist, die einander im Wesentlichen, bezogen auf den Fräsraum (12), gegenüberliegen und einen Luftstrom erzeugen, der einen Bearbeitungsbereich (30), an welchem ein Fräswerkzeug eine Fräsbearbeitung eines Fräswerkstücks vornimmt, überstreicht, wobei eine Seite des Fräsraums (12), insbesondere die Vorderseite, eine öffenbare Tür (62) aufweist, und die Bodenwand (42) des Fräsraumes (12) mindestens teilweise schräg verlaufend ausgebildet ist und wobei der Auslass (40) der Zuluft-Öffnung (26), welche an einer oberen Seite des geschlossenen Fräsraums (12) vorgesehen ist, diametral gegenüber liegt, **dadurch gekennzeichnet, dass** die Bodenwand (42) des Fräsraumes (12) nach der Art einer Hohlkehle ausgebildet ist, die sich quer durch den Fräsraum (12) erstreckt und der Fräsraum (12) in seitlicher Vertikalansicht betrachtet im Bereich der Bodenwand (42) eine U- oder V-förmige Gestalt aufweist, wobei die Bodenwand (42) des Fräsraums (12) geneigt ist, und zwar so, dass sie zum Anlass (40) hin abfällt, wobei der Auslass (40) an dem untersten Bereich der Bodenwand (42) angeschlossen ist und die unterste Stelle der Bodenwand (42) an einen Sauganschluss mündet.

2. Dentalfräsmaschine nach Anspruch 1, **dadurch gekennzeichnet, dass** der Fräsraum (12) durch ein einstückiges Formteil, insbesondere aus Kunststoff, gebildet ist, das eine spanabweisende und/oder nicht-haftende Oberfläche aufweist.

3. Dentalfräsmaschine nach Anspruch 1 oder 2, **dadurch gekennzeichnet, dass** eine Seitenwand des Fräsraums (12), insbesondere die Rückwand, eine bewegliche Teilwand oder die Tür (62) für die Hindurchführung eines Fräswerkstücks und/oder eines Fräswerkzeugs aufweist.

4. Dentalfräsmaschine nach einem der vorhergehenden Ansprüche, **dadurch gekennzeichnet, dass** die Bodenwand (42) des Fräsraums (12) zu dem Auslass (40) der Abluft-Öffnung hin monoton fallend ausgebildet ist und insbesondere eine Hohlkehle bildet.

5. Dentalfräsmaschine nach einem der vorhergehenden Ansprüche, **dadurch gekennzeichnet, dass** der Auslass (40) an einer äußeren unteren Ecke des Fräsraums (12)
angebracht ist und mindestens eine Luftdüse (32), bevorzugt eine Luftverstärkerdüse,
und/oder die Zuluft-Öffnung (26), welche an einer oberen Ecke angeordnet ist/sind, dem Auslass (40) diametral gegenüberliegend angebracht ist/sind.

6. Dentalfräsmaschine nach einem der vorhergehenden Ansprüche, **dadurch gekennzeichnet, dass** mindestens eine Luftdüse, insbesondere mehrere Luftdüsen (32) und/oder mindestens eine Deioniserelektrode (36), angeordnet sind, wobei insbesondere
vorgesehen ist, dass die Luftdüsen verschließbar und die Deionisierelektroden,
insbesondere für das Nassfräsen, abdeckbar sind und/oder dass dem Auslass (40) gegenüberliegend Düsen und/oder Deionisierelektroden (36) vorgesehen sind, welche Düsen beim Nassfräsen und beim Fräsen von Keramik, insbesondere Zirkondioxidkeramik, geöffnet und beim Fräsen von Kunststoff geschlossen sind, und welche Deionisierelektroden (36) beim Nassfräsen und beim Fräsen von Keramik wie Zirkondioxid über Absperrelemente vom Fräsraum (12) im Übrigen getrennt sind und beim Fräsen von Kunststoff im Luftstrom liegen.

7. Dentalfräsmaschine nach einem der vorhergehenden Ansprüche, **dadurch gekennzeichnet, dass** mindestens eine Luftdüse insbesondere eine Luftverstärkerdüse,
insbesondere eine Mehrzahl von nebeneinander angeordneten Luftdüsen (32), auf einen Bearbeitungsbereich (30) der Fräsmaschine ausgerichtet sind und dass der Bearbeitungsbereich (30) sich bezogen auf die zentrale Mitte des Fräsraums (12) insbesondere
oberhalb der Mitte und jenseits der Mitte, von einem Auslass des Fräsraums (12) betrachtet, erstreckt, wobei insbesondere die Düsen oben an dem Fräsraum (12) angebracht sind und mindestens eine Luftdüse (32), die einer Wand benachbart ist, mit ihrer Achse sich schräg zu dieser Wand hin erstreckt.

8. Dentalfräsmaschine nach einem der vorhergehenden Ansprüche, **dadurch gekennzeichnet, dass** der Fräsraum (12) vollständig einstückig und hinterschneidungsfrei
ausgebildet ist, insbesondere aus einem Kunststoffteil.

9. Dentalfräsmaschine nach einem der vorhergehenden Ansprüche, **dadurch gekennzeichnet, dass** der Auslass (40) am tiefsten Punkt des Fräsraums (12) angeflanscht ist und sich von diesem seitlich wegerstreckt und dass bei Nassbearbeitung ein Auslassschlauch oder ein Auslassrohr sich seitlich und/oder nach unten von dem Auslass (40) wegerstreckt.

10. Dentalfräsmaschine nach Anspruch 9, **dadurch gekennzeichnet, dass** eine Umschaltklappe (70) oder ein Umschaltventil des Auslasses (40) für die Umschaltung
zwischen Nassbearbeitung und Trockenbearbeitung vorgesehen ist.

11. Dentalfräsmaschine nach Anspruch 9 oder 10, **dadurch gekennzeichnet, dass** für die Trockenbearbeitung eine Saugleitung (52) unter Unterdruck setzbar ist, der auf den Auslass (40) wirkt, und dass für die Nassbearbeitung der Auslass (40) druckfrei das Abwasser und/ oder den Frässchlamm ableitet.

12. Dentalfräsmaschine nach einem der vorhergehenden Ansprüche, **dadurch gekennzeichnet, dass** eine Umschaltklappe (70) zwischen dem Anschluss für die Trockenbearbeitung und dem Anschluss für die Nassbearbeitung ein obenliegendes Gelenk aufweist und in der geöffneten Position für die Nassbearbeitung eine ebene untere Gleitfläche freigibt, die hinterschneidungsfrei ausgebildet ist.

13. Dentalfräsmaschine nach einem der vorhergehenden Ansprüche, **dadurch gekennzeichnet, dass** die Bodenwand (42) unterhalb des Bearbeitungsbereichs (30) geschlossen ist und eine im Wesentlichen konstante Neigung aufweist.

14. Dentalfräsmaschine nach einem der vorhergehenden Ansprüche, **dadurch gekennzeichnet, dass** die Neigung der Bodenwand (42) unterhalb des Bearbeitungsbereichs (30), also unterhalb des Werkstückträgers und des Werkzeugs, einen Neigungswinkel zwischen 5 und 60 Grad, bevorzugt zwischen 15 und 25 Grad und besonders bevorzugt etwa 20 Grad aufweist.

15. Dentalfräsmaschine nach einem der vorhergehenden Ansprüche, **dadurch gekennzeichnet, dass** der Luftstrom eine Mitnahmeströmung (50) aufweist, die sich entlang der Bodenwand (42) erstreckt und zum Auslass (40) gerichtet ist.

16. Dentalfräsmaschine nach einem der vorhergehenden Ansprüche, **dadurch gekennzeichnet, dass** sie eine Steuervorrichtung für den Luftstrom aufweist, über welche die Luftdüsen anschließend an einen Frässchritt impulsartig mit Druckluft beaufschlagbar sind.

17. Dentalfräsmaschine nach Anspruch 16, **dadurch gekennzeichnet, dass** die Steuervorrichtung geeignet ist, den Saugluftstrom während des Frässchritts mit einer gegenüber dem maximalen Saugluftstrom verminderten Saugleistung einzuschalten.

## Claims

1. A dental milling machine comprising a closed milling space (12), which has an inlet opening (26) and an outlet (40), which are substantially opposite each other in relation to the milling space (12) and generating an air flow, which sweeps across a machining area (30), where a milling tool carries out a milling operation on a milling workpiece, one side of the milling space (12), especially the front side, having an openable door (62), and the bottom wall (42) of the milling space (12) being designed to extend at least partially obliquely, and wherein the outlet (40) is located diametrally opposite to the supply-air opening (26), which is provided on a top side of the closed milling space (12), **characterized in that** the bottom wall (42) of the milling space (12) is designed in the manner of a fillet which extends transversely through the milling space (12), and the milling space (12) has a U-shaped or V-shaped configuration in the region of the bottom wall (42), as viewed in lateral vertical view, wherein the bottom wall (42) of the milling space (12) is inclined such that it inclines towards the outlet (40), wherein the outlet (40) is connected to the lowermost region of the bottom wall (42) and the lowermost point of the bottom wall (42) opens to a suction connection.

2. The dental milling machine according to claim 1, **characterized in that** the milling space (12) is formed by a one-piece molded part, especially of plastic, which has a chip-repellent and/or non-adhesive surface.

3. The dental milling machine according to claim 1 or 2, **characterized in that** a side wall of the milling space (12), especially the rear wall, comprises a movable partial wall or door (62) passing a milling workpiece and/or a milling tool.

4. The dental milling machine according to one of the preceding claims, **characterized in that** the bottom wall (42) of the milling space (12) is designed to monotonically decline toward the outlet (40) of the exhaust air opening and especially forms a fillet.

5. The dental milling machine according to one of the preceding claims, **characterized in that** the outlet (40) is mounted at an outer lower corner of the milling space (12) and at least one air nozzle (32), preferably an air amplifier nozzle, and/or the supply air opening (26), which is/are arranged at an upper corner, is/are mounted diametrically opposite to the outlet (40).

6. The dental milling machine according to one of the preceding claims, **characterized in that** at least one air nozzle, in particular several air nozzles (32) and/or at least one deionizing electrode (36), are arranged, wherein it is especially provided for the air nozzles to be able to be closed and the deionizing electrodes to be covered, in particular for wet milling, and/or the nozzles and/or deionizing electrodes (36) to be provided opposite to the outlet (40), which nozzles are open when wet milling and when milling ceramics, especially zirconium dioxide ceramics, and are closed when milling plastics, and which deionizing electrodes (36) are separated from the milling space (12) in other respects via shut-off elements when wet milling and milling ceramics such as zirconium dioxide and being located in the air flow when milling plastics.

7. The dental milling machine according to one of the preceding claims, **characterized in that** at least one air nozzle especially an air amplifier nozzle, in particular a plurality of air nozzles (32) arranged next to each another, are aligned with a processing region (30) of the milling machine, and **in that** the processing region (30) extends in relation to the central middle of the milling space (12), in particular above the middle and beyond the middle, as viewed from an outlet of the milling space (12), the nozzles in particular being fitted at the top of the milling space (12), and at least one air nozzle (32), which is adjacent to a wall, extending obliquely with its axis towards this wall.

8. The dental milling machine according to one of the preceding claims, **characterized in that** the milling space (12) is formed completely integrally and without undercuts, especially from a plastic part.

9. The dental milling machine according to one of the preceding claims, **characterized in that** the outlet (40) is flange-mounted at the lowermost point of the milling space (12) and laterally extending away therefrom, and **in that**, during wet processing, an outlet hose or an outlet tube laterally and/or downwardly extends away from the outlet (40).

10. The dental milling machine according to claim 9, **characterized in that** a switch-over flap (70) or a switch-over valve of the outlet (40) is provided for switching over between wet machining and dry machining.

11. The dental milling machine according to claim 9 or 10, **characterized in that** for dry processing a suction line (52) can be pressurized, the pressure acting on the outlet (40), and that for wet processing the outlet (40) discharges the waste water and/or the milling sludge without being pressurized.

12. The dental milling machine according to one of the preceding claims, **characterized in that** a switch-over flap (70) is provided between the connection for the dry processing and the connection for wet processing has an upper joint and, in the open position for wet processing, exposes a flat lower sliding surface which is designed to be free of undercuts.

13. The dental milling machine according to one of the preceding claims, **characterized in that** the bottom wall (42) below the machining area (30) is closed and comprising a substantially constant inclination.

14. The dental milling machine according to one of the preceding claims, **characterized in that** the inclination of the base wall (42) below the machining area (30), i.e. below the workpiece carrier and the tool, has an angle of inclination of between 5 and 60 degrees, preferably between 15 and 25 degrees and particularly preferably about 20 degrees.

15. The dental milling machine according to one of the preceding claims, **characterized in that** the air flow has an entrainment flow (50) which extends along the base wall (42) and is directed towards the outlet (40).

16. The dental milling machine according to one of the preceding claims, **characterized in that** it comprises a control device for the air flow, which is used so that the air nozzles can be impulsively pressurized with compressed air following a milling step.

17. The dental milling machine according to claim 16, **characterized in that** the control device is suitable for switching on the suction air flow with reduced suction power compared to the maximum suction air flow in the milling step.

## Revendications

1. Fraiseuse dentaire, avec une chambre de fraisage fermée (12), qui présente une ouverture d'entrée d'air (26) et une sortie (40), qui sont essentiellement opposées l'une à l'autre par rapport à la chambre de fraisage (12) et génèrent un flux d'air qui balaie une zone de travail (30), dans laquelle un outil de fraisage effectue une opération de fraisage sur une pièce à fraiser, où un côté de la chambre de fraisage (12), en particulier le côté frontal, présente une porte ouvrable (62), et la paroi de fond (42) de la chambre de fraisage (12) est formée au moins partiellement inclinée, et où la sortie (40) de l'ouverture d'air d'alimentation (26), qui est prévu sur un côté supérieur de la chambre de fraisage fermée (12), présente une ouverture (26) pour l'air d'alimentation, est diamétralement opposée, **caractérisé en ce que** la paroi de fond (42) de la chambre de fraisage (12) est formée à la manière d'une gorge annulaire qui s'étend transversalement à travers la chambre de fraisage (12) et la chambre de fraisage (12) en vue verticale latérale, présente une configuration en forme de U ou de V dans la région de la paroi de fond (42), où la paroi de fond (42) de la chambre de fraisage (12) est inclinée de telle manière qu'elle s'incline vers l'entrée (40), où la sortie (40) est reliée à la région la plus basse de la paroi de fond (42) et le point le plus bas de la paroi de fond (42) débouche sur un raccord d'aspiration.

2. Fraiseuse dentaire selon la revendication 1, **caractérisée en ce que** la chambre de fraisage (12) est formée par une pièce moulée en une seule pièce, en particulier en matière plastique, qui présente une surface anti-copeaux et/ou non adhésive.

3. Fraiseuse dentaire selon la revendication 1 ou 2, **caractérisée en ce qu'**une paroi latérale de la chambre de fraisage (12), en particulier la paroi arrière, présente une paroi partielle mobile ou la porte (62) pour le passage d'une pièce à fraiser et/ou d'un outil de fraisage.

4. Fraiseuse dentaire selon l'une des revendications précédentes, **caractérisée en ce que** la paroi de fond (42) de la chambre de fraisage (12) est conçue pour tomber de manière monotone vers la sortie (40) de l'ouverture d'évacuation d'air et forme notamment une gorge annulaire.

5. Fraiseuse dentaire selon l'une des revendications précédentes, **caractérisée en ce que** la sortie (40) est montée sur un coin inférieur extérieur de la chambre de fraisage (12) et au moins une buse d'air (32), de préférence une buse amplificatrice d'air, et/ou l'ouverture d'air d'alimentation (26), qui est/sont disposée(s) dans un coin supérieur, est/sont montée(s) diamétralement opposée(s) à la sortie (40).

6. Fraiseuse dentaire selon l'une des revendications précédentes, **caractérisée en ce qu'**au moins une buse d'air, en particulier plusieurs buses d'air (32) et/ou au moins une électrode de désionisation (36), sont disposées, où en particulier des buses d'air pouvant être fermées et des électrodes de désionisation pouvant être recouvertes sont prévus, en particulier pour le fraisage à l'eau, et/ou **en ce que** des buses et/ou des électrodes de désionisation (36) sont prévues en face de la sortie (40), où lesdites buses sont ouvertes lors du fraisage à l'eau et lors du fraisage de céramiques, en particulier de céramiques de dioxyde de zirconium, et sont fermées lors du fraisage de matière plastique, et où lesdites électrodes de désionisation (36) sont par ailleurs séparées du reste de la chambre de fraisage (12) par des éléments de fermeture lors du fraisage par voie humide et lors du fraisage de céramiques telles que le dioxyde de zirconium et sont situées dans le flux d'air lors du fraisage de matière plastique.

7. Fraiseuse dentaire selon l'une des revendications précédentes, **caractérisée en ce qu'**au moins une buse d'air, en particulier une buse amplificatrice d'air, en particulier une pluralité de buses d'air (32) disposées les unes à côté des autres, sont alignées avec une zone de travail (30) de la fraiseuse, et **en ce que** la zone de travail (30) s'étend par rapport au milieu central de la chambre de fraisage (12), en particulier au-dessus du milieu et au-delà du milieu, à partir d'une sortie de la chambre de fraisage (12), où en particulier les buses sont montées en haut de la chambre de fraisage (12) et au moins une buse d'air (32), qui est adjacente à une paroi, s'étend avec son axe en oblique vers cette paroi.

8. Fraiseuse dentaire selon l'une des revendications précédentes, **caractérisée en ce que** la chambre de fraisage (12) est formée entièrement en une seule pièce et sans contre-dépouille, notamment à partir d'une pièce en matière plastique.

9. Fraiseuse dentaire selon l'une des revendications précédentes, **caractérisée en ce que** la sortie (40) est montée par bride au point le plus bas de la chambre de fraisage (12) et s'étend latéralement à partir de celle-ci, et **en ce que** pendant l'usinage à l'eau, un tuyau de sortie ou un tube de sortie s'étend latéralement et/ou vers le bas à partir de la sortie (40).

10. Fraiseuse dentaire selon la revendication 9, **caractérisée en ce qu'**un clapet de commutation (70) ou une vanne de commutation de la sortie (40) est prévu pour commuter entre l'usinage à l'eau et l'usinage à sec.

11. Fraiseuse dentaire selon la revendication 9 ou 10, **caractérisée en ce que**, pour le traitement à sec, une conduite d'aspiration (52) peut être mise en dépression, qui agit sur la sortie (40), et **en ce que**, pour le traitement humide, la sortie (40) évacue sans pression les eaux usées et/ou la boue de fraisage.

12. Fraiseuse dentaire selon l'une des revendications précédentes, **caractérisée en ce qu'**un volet de commutation (70) entre le raccord pour l'usinage à sec et le raccord pour l'usinage à l'eau présente un joint supérieur et dégage, en position ouverte pour l'usinage à l'eau, une surface de glissement inférieure plane qui est conçue pour être exempte de contre-dépouilles.

13. Fraiseuse dentaire selon l'une des revendications précédentes, **caractérisée en ce que** la paroi de fond (42) sous la zone d'usinage (30) est fermée et présente une inclinaison sensiblement constante.

14. Fraiseuse dentaire selon l'une des revendications précédentes, **caractérisée en ce que** l'inclinaison de la paroi de fond (42) en dessous de la zone d'usinage (30), c'est-à-dire en dessous du porte-pièce et de l'outil, présente un angle d'inclinaison compris entre 5 et 60 degrés, de préférence entre 15 et 25 degrés et de manière particulièrement préférée d'environ 20 degrés.

15. Fraiseuse dentaire selon l'une des revendications précédentes, **caractérisée en ce que** le flux d'air présente un flux d'entraînement (50) qui s'étend le long de la paroi de fond (42) et est dirigé vers la sortie (40).

16. Fraiseuse dentaire selon l'une des revendications précédentes, **caractérisée en ce qu'**elle présente un dispositif de commande du flux d'air, par lequel les buses d'air peuvent être alimentées en air comprimé par impulsions après une étape de fraisage.

17. Fraiseuse dentaire selon la revendication 16, **caractérisée en ce que** le dispositif de commande est adapté pour mettre en marche le flux d'air d'aspiration pendant l'étape de fraisage avec une puissance d'aspiration réduite par rapport à la puissance d'aspiration maximale.
